# EUROPEAN PATENT APPLICATION

(11) **EP 4 773 573 A1**
(43) Date of publication of application: **08.07.2026**
(21) Application number: 24872955.0
(22) Date of filing: 26.09.2024
(51) Int. Cl.: H04L 65/1016, H04L 65/1045, H04L 65/1104, H04L 65/102, H04L 65/1069

(54) **APPARATUS AND METHOD FOR SUPPORTING DATA STREAM MULTIPLEXING IN INTERNET PROTOCOL MULTIMEDIA SUBSYSTEM-DATA CHANNEL SERVICE**

(30) Priority: 27.09.2023 KR 20230130296
(71) Applicant: Samsung Electronics Co., Ltd., Suwon-si, Gyeonggi-do 16677 (KR)
(72) Inventor: BAE, Jaehyeon, Suwon-si Gyeonggi-do 16677 (KR); YANG, Hyunkoo, Suwon-si Gyeonggi-do 16677 (KR)
(74) Representative: Nederlandsch Octrooibureau
(86) International application number: PCT/KR2024/014582
(87) International publication number: WO 2025/071247

(57) **Abstract**

The present disclosure relates to a 5G or 6G communication system for supporting higher data transmission rates. According to one embodiment of the present disclosure, a method of a proxy-call state control function (P-CSCF) entity in an internet protocol (IP) multimedia subsystem-data channel (IMS-DC) service may comprise the operations of: receiving, from a user equipment (UE), a data channel session connection request message including session description protocol (SDP) offer information, the SDP offer information including multiplexing support information; determining, on the basis of the multiplexing support information, whether to support multiplexing; and transmitting, to an IMS application gateway (AGW) entity, a request for data stream-related information including the multiplexing support information.

## Description

### [Technical Field]

The disclosure relates to an Internet protocol (IP) multimedia subsystem-data channel (IMS-DC) service and, more particularly, to a method and an apparatus for supporting data stream multiplexing during a bootstrap data channel setup signaling procedure and/or an application data channel setup signaling procedure for establishing an IMS-DC service connection.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mm Wave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

An IMS system is a system for transmitting IP-based multimedia, and various services such as VoLTE and VoNR are being provided through an existing IMS network associated with an LTE or 5G network. The purpose of an IMS data channel is to provide various value-added services, such as transmission of user location information using a separate application, screen sharing, and the like, in conventional RTP-based voice, video, and text services by using an IMS-associated data channel, that is, an IMS-DC service. In order to transmit value-added services through a data channel within an IMS data network, a terminal transmits signaling information for a data channel-based service to a network through a bootstrap data channel connection procedure, and the network transmits application information to the terminal, based on a user or a service provider's configuration and request information received from the terminal, thereby enabling the terminal to download an application for a specific service. The terminal may request and receive the application, based on the corresponding information. In addition, the network may allocate a separate media function entity within the network to receive data of the corresponding application, and may perform a media resource management service operation for establishing connection of the allocated media function entity to a data channel application server.

### [Detailed Description of the Invention]

### [Technical Problem]

The disclosure provides a method and an apparatus for transferring information for providing multiplexing to a media function entity or an IMS-AGW, so as to support data stream multiplexing according to service requirements of a terminal or a service provider during a bootstrap or application data channel connection procedure for using an IMS data channel service.

### [Technical Solution]

According to an embodiment of the disclosure, a method of a proxy-call state control function (P-CSCF) entity in an Internet protocol (IP) multimedia subsystem-data channel (IMS-DC) service includes receiving, from a user equipment (UE), a data channel session connection request message including session description protocol (SDP) offer information, the SDP offer information including multiplexing support information, determining, based on the multiplexing support information, whether to support multiplexing, and transmitting, to an IMS application gateway (IMS-AGW) entity, a request for data stream-related information including the multiplexing support information.

According to an embodiment of the disclosure, a method of an IMS application gateway (IMS-AGW) entity in an Internet protocol (IP) multimedia subsystem-data channel (IMS-DC) service includes receiving, from a proxy-call state control function (P-CSCF) entity, a request for data stream-related information including multiplexing support information, wherein the multiplexing support information is based on a data channel session connection request message including session description protocol (SDP) offer information received from a user equipment (UE).

According to an embodiment of the disclosure, a proxy-call state control function (P-CSCF) entity in an Internet protocol (IP) multimedia subsystem-data channel (IMS-DC) service includes a transceiver, and at least one processor, wherein the at least one processor is configured to receive, from a user equipment (UE), a data channel session connection request message including session description protocol (SDP) offer information, the SDP offer information including multiplexing support information, determine whether to support multiplexing, based on the multiplexing support information, and transmit, to an IMS application gateway (IMS-AGW) entity, a request for data stream-related information including the multiplexing support information.

According to an embodiment of the disclosure, an IMS application gateway (IMS-AGW) entity in an Internet protocol (IP) multimedia subsystem-data channel (IMS-DC) service may include a transceiver, and at least one processor, and the at least one processor is configured to receive, from a proxy-call state control function (P-CSCF) entity, a request for data stream-related information including multiplexing support information, wherein the multiplexing support information is based on a data channel session connection request message including session description protocol (SDP) offer information received from a user equipment (UE).

### [Advantageous Effects]

A method and an apparatus according to an embodiment of the disclosure may perform a bootstrap or application data channel setup procedure for discovering a media function entity or an IMS-AGW entity, and for generating and transferring information for supporting multiplexing, based on service requirements of a UE and a service provider and network information, in order to set up an IMS-DC service supporting data stream multiplexing.

### [Brief Description of Drawings]

FIG. 1 illustrates a network architecture and interfaces of a 5G system according to an embodiment of the disclosure.
FIG. 2 illustrates an example of a structure of an Internet protocol (IP) multimedia subsystem (IMS) data channel (IMS-DC) used to provide an IMS service-based data channel service according to an embodiment of the disclosure.
FIGS. 3A, 3B, and 3C are flowcharts illustrating a bootstrap data channel setup signaling procedure for requesting an Internet protocol (IP) multimedia subsystem-data channel (IMS-DC) service connection and downloading a related application at a UE, according to an embodiment of the disclosure.
FIG. 4 is a flowchart illustrating an operation of a P-CSCF for supporting a multiplexing-based application data channel service, in response to a request for the multiplexing-based application data channel service from a UE during an application data channel setup signaling procedure, according to an embodiment of the disclosure.
FIG. 5 is a flowchart illustrating an application data channel setup signaling procedure based on an application data channel connection type, performed by an Internet protocol (IP) multimedia subsystem application server (IMS AS) according to an embodiment of the disclosure.
FIG. 6 is a flowchart illustrating an application data channel setup signaling procedure based on an application data channel connection type, performed by an Internet protocol (IP) multimedia subsystem application server (IMS AS) according to an embodiment of the disclosure.
FIG. 7 is a flowchart illustrating an application data channel setup signaling procedure based on an application data channel connection type, performed by an Internet protocol (IP) multimedia subsystem application server (IMS AS) according to an embodiment of the disclosure.
FIG. 8A and FIG. 8B are flowcharts illustrating an application data channel setup signaling procedure in which an Internet protocol (IP) multimedia subsystem application server (IMS AS) transfers, to a remote network, information related to establishing an application data channel connection and receives a requested result from the remote network, according to an embodiment of the disclosure.
FIG. 9 illustrates an example of SDP offer and SDP answer information transferred through session request and session response messages that support multiplexing for an application data channel connection request from a UE, according to an embodiment of the disclosure.
FIG. 10 illustrates a structure of a network entity according to an embodiment of the disclosure.

### [Mode for Carrying out the Invention]

Hereinafter, an embodiment of the disclosure will be described in detail with reference to the accompanying drawings.

In describing the disclosure, descriptions related to technical contents well-known in the art and not associated directly with the disclosure will be omitted. Such an omission of unnecessary descriptions is intended to prevent obscuring of the main idea of the disclosure and more clearly transfer the main idea. The terms which will be described below are terms defined in consideration of the functions in the disclosure, and may be different according to users, intentions of the users, or customs. Therefore, the definitions of the terms should be made based on the contents throughout the specification.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

In the following description, a base station is an entity that allocates resources to terminals, and may be at least one of a gNode B, an eNode B, a Node B (or xNode B (where, x is an alphabet including g or e)), a wireless access unit, a base station controller, a satellite, an airborne, and a node on a network. A user equipment (UE) may include a mobile station (MS), a vehicular, a satellite, an airborne, a cellular phone, a smartphone, a computer, or a multimedia system capable of performing communication functions. In the disclosure, a "downlink (DL)" refers to a radio link via which a base station transmits a signal to a terminal, and an "uplink (UL)" refers to a radio link via which a terminal transmits a signal to a base station. Additionally, a "sidelink (SL)" may exist, which refers to a radio link via which a UE transmits a signal to another UE.

Furthermore, in the following description, LTE, LTE-A, or 5G systems may be described by way of example, but the embodiments of the disclosure may also be applied to other communication systems having similar technical backgrounds or channel types. For example, 5G-Advance, NR-Advance, or 6th generation (6G) mobile communication technologies developed beyond 5G mobile communication technologies (or new radio (NR)) may be included therein, and in the following description, the "5G" may be the concept that covers the exiting LTE, LTE-A, or other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

The 3GPP, which is responsible for cellular mobile communication standardization, has introduced a new core network structure named 5G core (5GC) and is pursuing the standardization in order to push evolution from a 4G LTE system to a 5G system. 5GC supports the following distinguishable functions, compared to an evolved packet core (EPC) that is a network core for 4G.

In 5GC, a network slicing function is introduced. As requirements of 5G, 5GC is required to support various terminal types and services (e.g., enhanced mobile broadband (eMBB), ultra reliable low latency communications (URLLC), and massive machine type communications (mMTC)). Such terminals/services have different requirements for a core network. For example, the eMBB service may require a high data rate, and the URLLC service may require high stability and low latency. A network slicing technology has been proposed to satisfy these various service requirements.

Network slicing may mean a method of virtualizing one physical network to make many logical networks (e.g., network slices). Activated network slices may be called network slice instances, and each network slice instance (NSI) may have a different characteristic. A mobile communication service provider may configure a network function (NF) suitable for the characteristic of each NSI so as to satisfy various service requirements according to terminals/services. For example, the mobile communication service provider may assign an NSI suitable for the characteristic of a service required thereby, so that many 5G services (e.g., eMBB, URLLC, or mMTC) are efficiently supportable.

5GC may easily support a network virtualization paradigm by separating a mobility management function and a session management function. In 4G LTE, all terminals have been provided with services from a network through signaling exchange with single core equipment, which is called a mobility management entity (MME) serving as registration, authentication, and a mobility management and session management function. In 5G, as the number of terminals (including, for example, MTC terminals) has explosively increased and mobility and traffic/session characteristics to be supported have been subdivided according to terminal types, scalability for adding entities according to required functions is inevitably reduced if a single entity (for example, MME) supports all the functions. Therefore, in order to improve scalability in terms of signaling loads and the function/implementation complexity of a core entity responsible for a control plane, various functions are being developed based on a structure of separating a mobility management function and a session management function.

Interactive services require very low latency to support two-way communication, and additional requirements may arise when such interactive services for accessibility enhancement are used for content delivery. According to the disclosure, in order to use a service employing a data channel-based application that requires very low latency, a UE or a service provider server provides, to a network, a low latency value required for providing the service at the time of a service connection request. The network may provide a function of searching for and selecting an appropriate media function entity based on the required latency value when connecting a bootstrap data channel for the service employing the data channel-based application.

The disclosure introduces a method for establishing a connection of a service employing a data channel-based application that requires very low latency, and for transmitting, to a network, parameters related to establishing the connection, thereby performing connection operations between network entities to provide low latency through a bootstrap data channel setup signaling procedure based on the transmitted information. In session initiation protocol (SIP), information related to a low latency requirement may be transferred in a 3gpp-hint-qos field, or when an application server registers data channel-related information in a data channel signaling function entity of a data channel server, low latency information required to use the corresponding application-related service may be registered together with the data channel-related information. The IMS application server (IMS AS) that has received the information may use relevant information, based on service requirements, in searching for a network function entity in order to select a media function entity while considering an e2e delay. In addition, when registering a network function of a media function entity in an NRF, relevant information may be additionally included in and registered as part of a media profile, thereby enabling the IMS AS to support discovery of a network function entity based on the low latency requirement and selection of a media function entity based on the relevant information.

In order to support transmission/reception operations in a UE via a data stream using a single port for multiple applications and multiple streams delivered from a data channel application server and a remote UE, a media resource management service operation for supporting multiplexing of data streams through a media function entity or an IMS application gateway (IMS-AGW) in a network may be performed. In addition, the UE may transmit, to the network, a request for application-related information supporting multiplexing through a bootstrap data channel setup procedure. Upon receiving the request, the network may transmit, to the UE, an application list including application information that supports multiplexing, thereby supporting a multiplexing-enabled service.

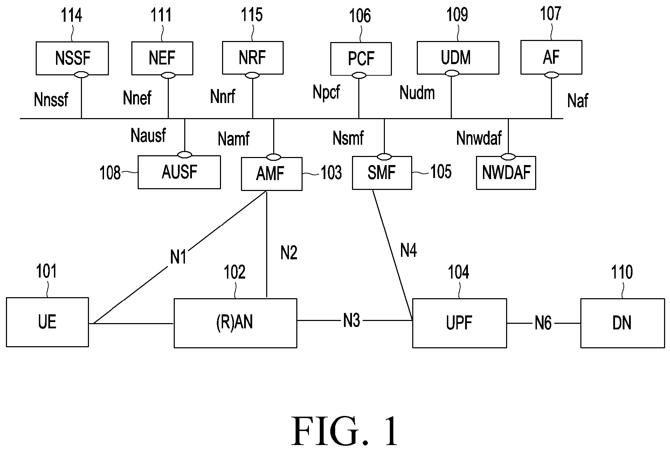

FIG. 1 illustrates a network architecture and interfaces of a 5G system according to an embodiment of the disclosure.

Network entities included in the network architecture of the 5G system in FIG. 1 may include network functions (NFs), depending on system implementations.

Referring to FIG. 1, the network architecture of the 5G system may include various network entities. For example, a 5G system may include an authentication server function (AUSF) entity 108, a (core) access and mobility management function (AMF) entity 103, a session management function (SMF) entity 105, a policy control function (PCF) entity 106, an application function (AF) entity 107, a unified data management (UDM) entity 109, a data network (DN) 110, a network exposure function (NEF) entity 111, a network slicing selection function (NSSF) entity 114, a network repository function (NRF) entity 115, a network data analytics function (NWDAF), an edge application service domain repository (EDR), an edge application server (EAS), an EAS discovery function (EASDF), a user plane function (UPF) entity 104, a (radio) access network ((R)AN) 102, and a terminal, e.g., a user equipment (UE) 101.

The respective NFs in the 5G system 100 may support the following functions.

The AUSF 108 processes and stores data for authentication of the UE 101.

The AMF 103 may provide a function for access and mobility management on a per-UE basis, and basically, one UE may be connected to one AMF. Specifically, the AMF 103 supports functions, such as inter-CN node signaling for mobility between 3GPP access networks, termination of a radio access network (RAN) CP interface (i.e., N2 interface), termination (N1) of non-access stratum (NAS) signaling, NAS signaling security (NAS ciphering and integrity protection), AS security control, registration management (registration area management), connection management, idle mode UE reachability (including control and execution of paging retransmission), mobility management control (subscription and policy), intra-system mobility and inter-system mobility support, support of network slicing, SMF selection, lawful interception (for an AMF event and an interface to an LI system), provision of transfer of a session management (SM) message between a UE and an SMF, a transparent proxy for SM message routing, access authentication, access authorization including a roaming right check, provision of transfer of an SMS message between a UE and an SMSF, a security anchor function (SEA) and/or security context management (SCM). Some or all of the functions of the AMF entity 103 may be supported in a single instance of one AMF entity.

The DN 110 refers to, for example, an operator service, internet access, or a third-party service. The DN 110 transmits a downlink protocol data unit (PDU) to the UPF 104, or receives, from the UPF 104, a PDU transmitted by the UE 101.

The PCF entity 106 provides a function of receiving information on a packet flow from an application server to determine policies, such as mobility management and session management. Specifically, the PCF entity 106 supports functions, such as supporting a unified policy framework for controlling network operations, providing policy rules so that control plane function(s) (e.g., AMF entity, SMF entity, etc.) can enforce the policy rules, and implementing a front end for accessing relevant subscription information for policy decisions in a user data repository (UDR).

The SMF entity 105 may provide a session management function, and when the UE 101 has multiple sessions, the sessions may be managed by different SMF entities. Specifically, the SMF entity 105 supports functions, such as session management (e.g., session establishment, modification, and release, including tunnel maintenance between the nodes of the UPF entity 140 and the (R)AN 102), UE IP address allocation and management (including selective authentication), selection and control of a UP function, configuration of traffic steering at the UPF entity 104 to route traffic to a proper destination, termination of interfaces towards policy control functions, execution of a control part of a policy and a quality of service (QoS), lawful interception (regarding an SM event and an interface to an LI system), termination of session management (SM) parts of NAS messages, downlink data notification, an initiator of access network (AN)-specific SM information (this is transferred to the (R)AN 102 through N2 via the AMF entity 103), determination of a session and service continuity (SSC) mode of a session, and a roaming function. Some or all of the functions of the SMF entity 105 may be supported in a single instance of one SMF entity.

The UDM entity 109 stores the user's subscription data, policy data, and the like. The UDM entity 109 includes two parts, that is, an application front end (FE) and a user data repository (UDR).

The front end (FE) includes a UDM FE responsible for location management, subscription management, and credential processing, and a PCF entity responsible for policy control. The UDR stores data required for functions provided by the UDM-FE, and a policy profile required by the PCF entity. Data stored in the UDR includes policy data and user subscription data including subscription identifiers, security credentials, subscription data related to access and mobility, and session-related subscription data. The UDM-FE accesses subscription information stored in the UDR, and supports a function such as authentication credential processing, user identification handling), access authentication, registration/mobility management, subscription management, and SMS management.

The UPF entity 104 transfers a downlink PDU, received from the DN 110, to the UE 101 via the (R)AN 102, and transfers an uplink PDU, received from the UE 101, to the DN 110 via the (R)AN 102. Specifically, the UPF entity 104 supports functions, such as an anchor point for intra/inter-RAT mobility, an external PDU session point of interconnection to a data network, packet routing and forwarding, packet inspection and a user plane part of policy rule enforcement, lawful interception, traffic usage reporting, an uplink classifier for supporting to route traffic flows to a data network, a branching point for supporting a multi-homed PDU session, QoS handling for a user plane (e.g., packet filtering, gating, and uplink/downlink rate enforcement), uplink traffic verification (service data flow (SDF) mapping between an SDF and a QoS flow), transport level packet marking in uplink and downlink, and a downlink packet buffering and downlink data notification triggering function. Some or all of the functions of the UPF entity 104 may be supported within a single instance of one UPF.

The AF entity 107 interacts with a 3GPP core network for service provision (e.g., support of a function, such as application influence on traffic routing, access to network capability exposure, and interaction with a policy framework for policy control).

The (R)AN 102 collectively refers to new radio access networks capable of supporting both evolved E-UTRA which is an evolved version of 4th generation (4G) radio access technology and new radio (NR) technology (e.g., gNB).

The gNB supports functions, such as functions for radio resource management (i.e., radio bearer control, radio admission control, connection mobility control, and dynamic allocation of resources (i.e., scheduling) to the UE in an uplink/downlink), Internet protocol (IP) header compression, encryption and integrity protection of a user data stream, selection of the AMF upon attachment of the UE when routing to the AMF has not been determined based on information provided to the UE, user plane data routing to the UPF(s), control plane information routing to the AMF, connection setup and release, paging message scheduling and transmission (generated from the AMF), system broadcast information scheduling and transmission (generated from the AMF or operation and maintenance (O&M)), measurement and measurement report configuration for mobility and scheduling, transport level packet marking in the uplink, session management, support of network slicing, QoS flow management and mapping to a data radio bearer, support of the UE that is in an inactive mode, a distribution function of a NAS message, a NAS node selection function, radio access network sharing, dual connectivity, and tight interworking between the NR and the E-UTRA.

The UE 101 refers to a user equipment. A user equipment may be referred to as the terms "terminal", "mobile equipment (ME)", "mobile station (MS)", etc. In addition, the user equipment may be a portable device, such as a laptop, a mobile phone, a personal digital assistant (PDA), a smartphone, or a multimedia device, or may be a non-portable device, such as a personal computer (PC) or a vehicle-mounted device.

The NEF 111 provides a means for securely exposing services and capabilities provided by 3GPP network functions, for, for example, a 3rd party, internal exposure/re-exposure, application functions, and edge computing. The NEF 111 receives information (based on the exposed capability (capabilities) of (an)other NF(s)) from the other NF(s). The NEF 111 may store information received as data structured by using a standardized interface as a data storage network function. The stored information may be re-exposed by the NEF entity 111 to other NF entity(entities) and AF entity (entities) and used for other purposes such as analysis.

The EASDF is an NF that is capable of adding, for each fully qualified domain name (FQDN), an address of a domain name system (DNS) server to which a DNS request of the UE is to be forwarded, and an extension mechanisms for DNS (EDNS) client subnet (ECS) option representable by an IP subnet address required to be added when the DNS request of the UE is forwarded. The EASDF receives exchange active sync (EAS) domain configuration information from the EDR, and processes a DNS request message received from the UE, according to the received information. In addition, the EASDF is an NF that performs a function of receiving, from the SMF 105, a UE IP address, location information of the UE in 3GPP, a DNS message handling rule, and a DNS message reporting rule, handling a DNS query message received from the UE and a DNS response message received from a DNS server, and transmitting, according to the DNS message reporting rule, information in a DNS message and statistical information obtained by processing same to the SMF 105.

The NRF 115 supports a service discovery function. The NRF 115 receives an NF discovery request from an NF instance, and provides information on a discovered NF instance to the NF instance. In addition, the NRF 115 maintains available NF instances and services supported by the available NF instances.

For the sake of descriptive convenience FIG. 1 illustrates a reference model for a case where the UE 101 accesses one DN 110 by using one PDU session, but the disclosure is not limited thereto.

The UE 101 may concurrently access two (i.e., local and central) data networks by using multiple PDU sessions. In this case, two SMFs may be selected for different PDU sessions. However, each SMF may be capable of controlling both the local UPF and central UPF in the PDU session.

In addition, the UE 101 may simultaneously access two (i.e., local and central) data networks provided within a single PDU session.

In 3GPP systems, conceptual links connecting NFs in the 5G system are defined as reference points. As an example, reference points included in the 5G system 100 of FIG. 1 are as follows.
- N1: A reference point between a UE 101 and an AMF 103
- N2: A reference point between an (R)AN 102 and an AMF 103
- N3: A reference point between an (R)AN 102 and a UPF 104
- N4: A reference point between an SMF 105 and a UPF 104
- N5: A reference point between a PCF 106 and an AF 107
- N6: A reference point between a UPF 104 and a DN 110
- N7: A reference point between an SMF 105 and a PCF 106
- N8: A reference point between a UDM 109 and an AMF 103
- N10: A reference point between a UDM 109 and an SMF 105
- N11: A reference point between an AMF 103 and an SMF 105
- N12: A reference point between an AMF 103 and an AUSF 108
- N13: A reference point between a UDM 109 and an AUSF 108
- N14: A reference point between two AMFs 103
- N15: A reference point between a PCF and an AMF for a non-roaming scenario, and a reference point between a PCF and an AMF in a visited network for a roaming scenario
- Nx: A reference point between an SMF 105 and an EASDF
- Ny: A reference point between an NEF (EDF) 111 and an EASDF

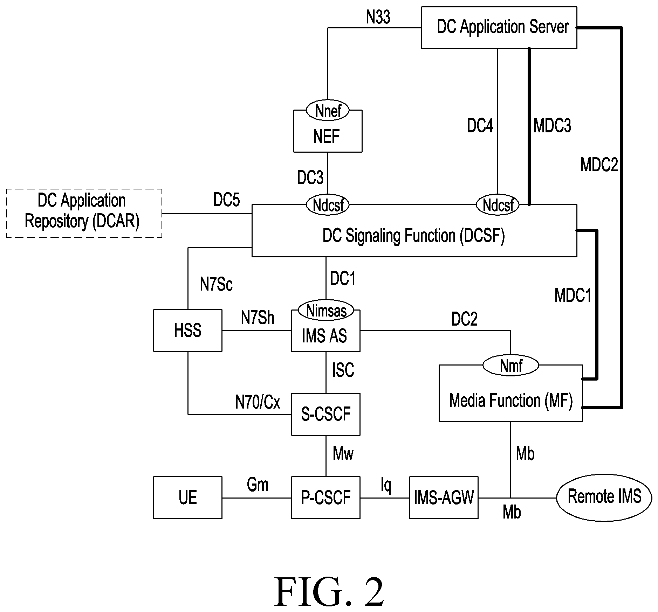

FIG. 2 illustrates an example of an architecture of an Internet protocol (IP) multimedia subsystem data channel (IMS-DC) for providing a data channel service based on an Internet protocol (IP) multimedia subsystem (IMS) service according to an embodiment of the disclosure.

In the architecture, the UE may transmit a session initiation protocol (SIP) INVITE message to an existing call session control function (CSCF), such as a proxy-call session control function (P-CSCF) or a serving-call session control function (S-SCSF), for a call session connection request. The SIP INVITE message may include media-related parameters and multiplexing-related requirement information within a session description protocol (SDP), and may transfer the same to the network. In addition, the UE may include an SDP offer including bootstrap information in a SIP INVITE message together with an SDP offer for establishing connection of an existing video or audio session in order to use an IMS data channel service.

When the S-CSCF receives the SIP INVITE including the SDP information, if the SIP INVITE includes a bootstrap data channel SDP offer for requesting a data channel service connection, the S-CSCF may transfer the corresponding bootstrap-related SDP offer content to the IMS AS. In this case, the S-CSCF may check whether the UE or the network supports IMS-DC, based on the received bootstrap-related SDP offer content. If both the UE and the network support a data channel, the S-CSCF may then determine to transfer, to the IMS AS, information for establishing a bootstrap data channel connection for a data channel connection. Upon receiving the bootstrap-related SDP offer message from the S-CSCF, the IMS AS may first identify, from a home subscriber server (HSS), whether the corresponding UE or subscriber is allowed to use the data channel service. If the user is not allowed to use the data channel based on a user profile, a multimedia telephony (MMTel) session setup operation may be performed without establishing a data channel connection through a general IMS procedure. In addition, when the user is unable to use a data channel-based service, the IMS AS may delete data channel (DC)-related media information from the SIP INVITE message received from the S-CSCF, update the SIP INVITE message, and transmit the updated SIP INVITE message back to the S-CSCF.

When a service user is allowed to use an IMS data channel-based service, data channel bootstrapping may be performed by transmitting a data channel call request to a data channel signaling function (DCSF). An IMS AS may discover and select a DCSF instance from a network repository function (NRF), based on local configuration of a network operator or information received from a UE. The IMS AS may transmit, to the DCSF selected through the above-described process, a session event control notification (SessionEventControl_Notify) message including information such as a SessionEstablishmentRequestEvent, a Session ID, a CallingID, a CalledID, a SessionCase, an Event initiator, a MediaInfoList, and a DC Stream ID.

The DCSF, having received a DC control request from the IMS AS, may perform policy decision on how to generate a bootstrap data channel, based on relevant parameters in the DC control request message. In addition, the DCSF may determine the MDC1 media information so that the UE can download an application through the MF or MRF.

Based on the determined information, the DCSF may transfer a MediaControl_MediaInstruction message including information, such as a SessionID and a MediaInstructionSet, to the IMS AS. The DCSF may include a MDC1 media endpoint address, a DC stream ID, alternative information for URL of an application list transmitted through the MDC1 interface, etc., in the MediaInstructionSet, and transfer the same to the IMS AS. Based thereon, the DCSF may provide, to the IMS AS, a policy for generating a bootstrap data channel using a MF at originating and terminating sides.

The IMS AS may select a MF by performing a process of searching for and selecting, using an NRF, a MF instance or an enhanced MRF that supports a DC media function.

The IMS AS may transfer the list of media termination descriptors to the MF selected through the above-described procedure via an Nmf_MRM_Create message. The IMS AS may request generation of two different media terminations. One media termination may represent local bootstrap media-related information, and the other media termination may represent remote bootstrap media-related information to be provided to a UE. Each media termination may include resource allocation requirement information for Mb and MDC1 interfaces. The MF may transfer a result of negotiation of the corresponding data channel media resource information to the IMS AS.

The IMS AS may transfer a response to a MediaInstruction request from the DCSF. The corresponding response message may include result information of the above-described operation and negotiation information related to MDC1 data channel media resource information.

The DCSF may store media resource information included in a response message for the MediaInstruction request transferred from the IMS AS, and may transfer, to the IMS AS, a response message related to a data channel connection notification (SessionEventControl_Notify) request received from the IMS AS.

The IMS AS may transmit a SIP INVITE message including an updated SDP offer with added media information of the MF or the enhanced MRF to the S-CSCF. The S-CSCF may transfer the received SIP INVITE message including the updated SDP offer to the remote network and UE#2.

UE#2 and a terminating network may transfer, to an originating network, a bootstrap data channel-related SDP response by including the same included in an 18X response message. Based on the received SDP response message, the MF or MRF may update data channel media resource information of UE#2. Thereafter, UE#2 and the terminating network may transmit a 200 OK response message indicating that the request has been successfully completed.

The IMS AS may transfer, to the DCSF, a SessionEventControl Notify message including SessionEstablishmentSuccessEvent, SessionID, and MediaInfoList to notify the DCSF of event information related to a successful session connection. After receiving, from the DCSF, a response message regarding the successful session connection event notification, the IMS AS may transfer, to UE#1, a 200 OK message indicating that a bootstrap data channel connection has been established. Through this, a bootstrap data channel connection may be established among UE#1, UE#2, and an originating MF or an enhanced MRF. Thereafter, UE#1 and UE#2 may transmit application request messages to the MF or the enhanced MRF to request a data channel application. If a multi-DC application is supported, an application list may be requested. The MF or the MRF may change a root URL to an application-related URL information, based on replacement URL information received from the DCSF. Thereafter, the MF may transfer, to the DCSF, the application request message received from the UE. The DCSF may provide, to UE#1 and UE#2, an application list or appropriate data channel applications according to data channel processing capability and selection of the UE. When a terminating MF or an enhanced MRF is used depending on a location of the MF, the above-described process may be performed through a terminating DCSF, and an appropriate data channel application may be downloaded.

After connection of an IMS session and a bootstrap data channel, and after a data channel application is downloaded to UE#1 and UE#2, UE#1 may transmit, to the IMS AS, a SIP re-INVITE message including an updated SDP. The updated SDP may include not only bootstrap data channel information, but also an application data channel request and related data channel (DC) application binding information.

The IMS AS may determine whether to notify the DCSF of a media change request event, based on the user subscription data information. If the IMS AS has determined to perform event notification to the DCSF, the IMS AS may transmit, to the DCSF, a SessionEventControl_Notify message including a MediaChangeRequestEvent, a Session ID, an Event Direction, an Event initiator, and a Media Info List.

After receiving the session event notification message, the DCSF may determine a policy of how to perform an application data channel connection request, based on the related parameters transferred through the notification message and a policy of a network operator. When the DCSF determines that UE#2 is a target endpoint and that an anchor of a local MF or an enhanced MRF is not required, the DCSF may determine to add an application data channel media descriptor to an SDP offer. If an MF or an enhanced MRF is required as an anchor for an application data channel, the DCSF may transfer an Nimsas_MediaControl message to the IMS AS to instruct the IMS AS to perform allocation of data channel media resources of the MF or the enhanced MRF.

The DCSF may transfer a response to a session event notification message to the IMS AS. Thereafter, the IMS AS may transfer a SIP re-INVITE message to the originating S-CSCF, and the S-CSCF may transfer the same to the terminating network and UE#2.

UE#2 and the terminating network may include a 200 OK response in an SDP response related to an application data channel, and transfer the same to the originating network. After receiving an SDP offer response message including 200 OK from the terminating network, the IMS AS may notify the DCSF of a successful data channel change. The DCSF will transmit a response to the notification to the IMS AS, and then the IMS AS may transfer the 200 OK response to UE#1 through the originating S-CSCF and the P-CSCF. In this case, the P-CSCF of the originating network may perform a QoS procedure for an application data channel media, based on the SDP response information including the 200 OK response. UE #1 may transmit an ACK to the terminating network. Through the above process, an application data channel connection operation between UE#1 and UE#2 may be performed.

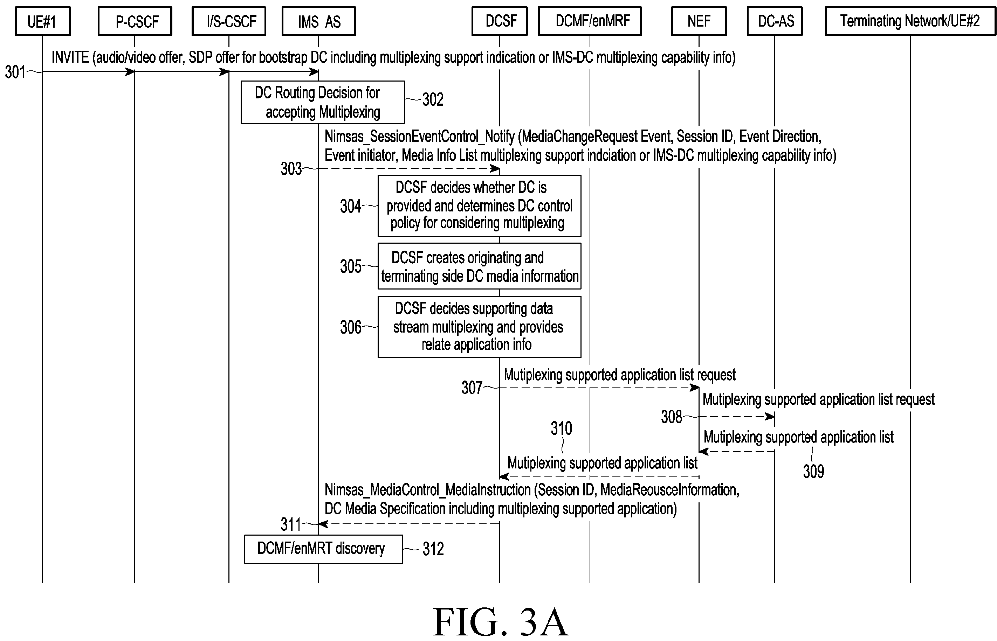

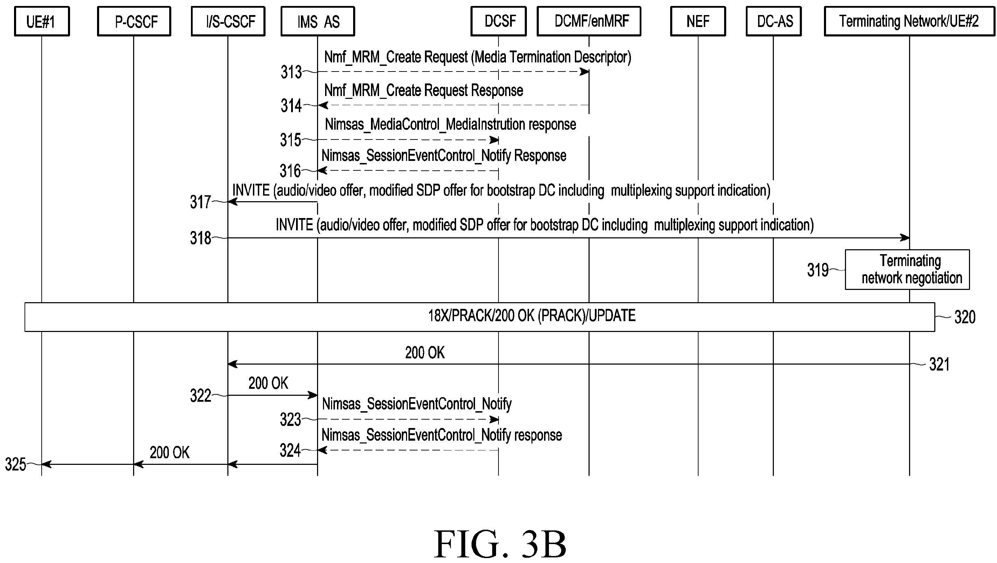

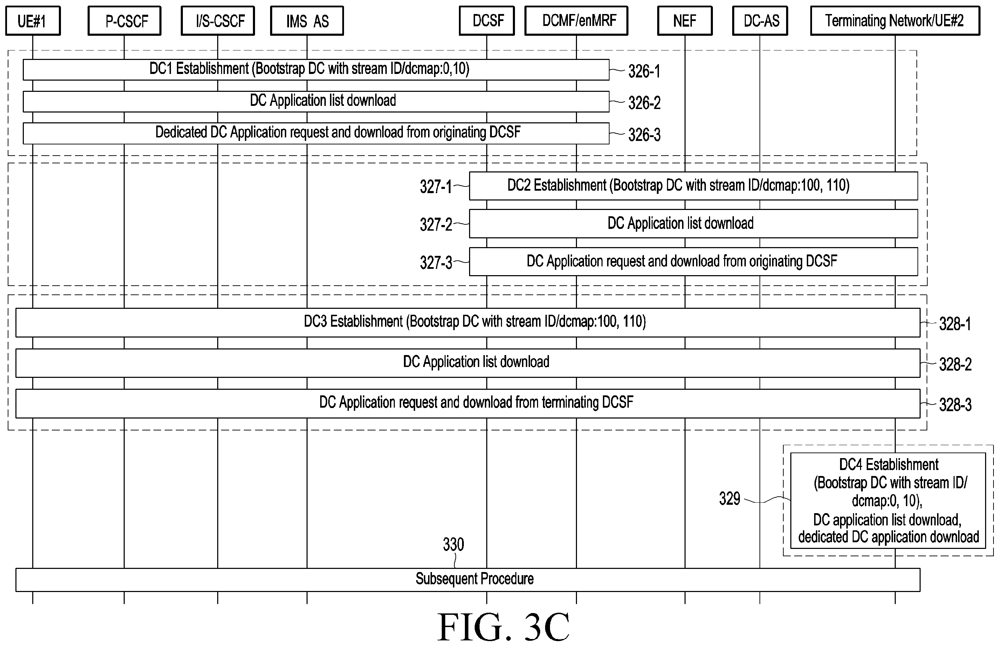

FIG. 3 is a flowchart illustrating a bootstrap data channel setup signaling procedure for requesting an Internet protocol (IP) multimedia subsystem-data channel (IMS-DC) service connection and downloading a related application at a UE, according to an embodiment of the disclosure.

In operation 301, a UE (UE #1) may transmit, to a CSCF such as a P-CSCF or an S-CSCF, a SIP INVITE message including request information for establishing connection of a video or audio session. According to an embodiment, the SIP INVITE message may include media-related parameters for video or audio and QoS-related requirement information in an SDP, and the SIP INVITE message including the SDP may be transmitted to a network. In addition, in order to request a service connection using additional data in addition to an existing video- or audio-based session connection request, bootstrap information for establishing an IMS data channel session connection may be transmitted together in an SDP offer. In this case, service-related specific requirement information (e.g., multiplexing support-related requirement information) ("Multiplexing supported DC", "IMS-DC-Multiplexing") may be included in SDP attribute information within the bootstrap data channel-related SDP offer and transmitted together.

In an embodiment, the UE may transfer, to a CSCF, a SIP message including a multiplexing-related indicator or capability information (multiplexing support indication, or IMS-DC multiplexing capability info) during an IMS registration procedure, in order to request and use a service through multiplexing of a data stream, and may register the capability information of the UE for the multiplexing. In an embodiment, the UE may include the multiplexing requirement information in a SIP message or an SDP offer without a separate registration procedure, and may transfer multiplexing-related requirements by including the same in a session-level SDP attribute or a media-level attribute when requesting a data channel-related call setup.

In an embodiment, when the S-CSCF receives the SIP INVITE including SDP information and including a bootstrap data channel SDP offer for requesting a data channel service connection, the S-CSCF may transfer the corresponding bootstrap-related SDP offer content to the IMS AS. In an embodiment, in this case, the S-CSCF may check whether the UE or network supports IMS-DC based on the received bootstrap-related SDP offer content, and if both the UE and the network support a data channel, the S-CSCF may then determine to transfer, to the IMS AS, information for establishing a bootstrap data channel connection for a data channel connection.

According to an embodiment, when a multiplexing-based IMS-DC service connection request is received as described above, the S-CSCF may determine whether a UE has IMS-DC-multiplexing capability information, based on information included in an SDP received from the UE, or may determine whether to support and accept the multiplexing-based IMS-DC service request, based on UE information received during an IMS registration procedure and IMS-DC-Multiplexing capability information of a corresponding network. In an embodiment, when multiplexing functionality is supported by both the UE and the network as described above, an application list received by the UE through a bootstrap data channel setup procedure may include application information supporting multiplexing.

In operation 302, the IMS AS, having received a bootstrap-related SDP offer message from the S-CSCF, may first identify, from the HSS, whether the corresponding UE or the corresponding subscriber is allowed to use a data channel service supporting the corresponding multiplexing. In an embodiment, if the user cannot use a data channel supporting multiplexing, based on the user profile of the corresponding user, the application data channel connection process for each data channel stream may be performed through a general IMS-DC connection process. In an embodiment, in addition, if a corresponding user is unable to use a data channel-based service supporting multiplexing, the IMS AS may delete multiplexing-related media information from a SIP INVITE message transferred from the S-CSCF, update the SIP INVITE message, and then transfer the updated SIP INVITE message to the S-CSCF.

In an embodiment, when a service user is able to use a multiplexing-based IMS data channel service, data channel bootstrapping may be performed by transmitting a data channel call request to a data channel signaling function (DCSF). In an embodiment, the IMS AS may discover and select a DCSF instance from the NRF, based on a local configuration of a network operator or information received from the UE, and may select the DCSF. In an embodiment, when multiplexing-related attribute information (IMS-DC multiplexing capability info) is included in the SDP offer related to a bootstrap data channel received from the UE, the IMS AS may determine generation of information of a data channel service indication indicating support for multiplexing (multiplexing support indication) for the corresponding data channel service.

In operation 303, the IMS AS may transfer a session event control notification (SessionEventControl_Notify) message including at least one of a SessionEstablishmentRequestEvent, a Session ID, a CallingID, a CalledID, a SessionCase, an Event initiator, a MediaInfoList, a DC Stream ID, and a multiplexing support indication to the selected DCSF according to the information transferred from the UE in operation 302 or a network operator policy. According to an embodiment, the MediaInfoList may include an IMS-DC multiplexing capability info or a multiplexing support indication that supports multiplexing.

In operation 304, the DCSF that has received a DC control request for an IMS-DC service connection from the IMS AS may perform bootstrap data channel-related policy decision in consideration of multiplexing, based on relevant parameters in the DC control request message.

In operations 305 and 306, the DCSF may determine MDC1 media information so that the UE may download an application through the MF or MRF. In an embodiment, when the DCSF receives information indicating that multiplexing is supported by the UE and a network, or receives multiplexing support request information in relation to the service request information of the corresponding user, the DCSF may add application information supporting multiplexing to the application list and provide the application list to the UE. In an embodiment, when an application supporting the corresponding multiplexing is not available in the DCSF, the DCSF may request and receive application-related information supporting multiplexing from a data channel application server through operations 307 to 310.

In operations 307 and 308, the DCSF may transfer media-related information including a multiplexing support indicator transferred from the IMS AS to the data channel application server through the NEF. In an embodiment, the data channel application server may determine application information including a replacement HTTP URL supportable based on the received media-related information, and media information (MediaInstruction) related to an MF.

In operations 309 and 310, the data channel application server may transfer application information and MF-related media information (MediaInstruction) including a supportable replacement HTTP URL, which is determined based on the information transferred from the DCSF in operations 307 and 308, to the DCSF through the NEF.

In operation 311, the DCSF may transfer, to the IMS AS, a MediaControl_MediaInstruction message including information such as SessionID and MediaInstructionSet, based on information received from the data channel application server. In an embodiment, the DCSF may transfer, to the IMS AS, MediaInstructionSet information including an MDC1 media endpoint address, a DC stream ID, and replacement information of a URL of an application list including application information supporting multiplexing delivered through an MDC1 interface. In an embodiment, based thereon, the DCSF may provide, to the IMS AS, a policy for generating a bootstrap data channel using an MF at originating and terminating sides. In an embodiment, if the DCSF has application information supporting multiplexing and MF-related media information and is able to provide the relevant information, operations 307 to 310 may be omitted.

In operation 302, the IMS AS may select the MF or the enhanced MRF, based on information transferred from the DCSF. The IMS AS may transfer an NF discovery request (NFDiscovery_Request) message for discovery and selection of an MF instance or an enhanced MRF to the NRF. According to an embodiment, the NRF may select an appropriate MF, based on an MF profile information within an NF discovery request message transferred for MF selection by the IMS AS. In an embodiment, the NRF may select an MF that satisfies an MF profile requirement transferred from the IMS AS, and may transfer corresponding information to the IMS AS through an NF discovery request response (NFDiscovery_Request Response) message.

In operations 303 and 314, the IMS AS may transfer, to the MF selected in the above-described process, a list of media termination descriptors through an Nmf_MRM_Create message. In an embodiment, the IMS AS may request generation of two different media terminations. One media termination information may represent local bootstrap media-related information, and the other media termination information may represent remote bootstrap media-related information to be provided to a remote UE. In an embodiment, each media termination may include resource allocation requirement information for the Mb and MDC1 interfaces. In an embodiment, the MF may transfer a result of negotiation of the corresponding data channel media resource information to the IMS AS.

In operation 315, the IMS AS may receive a data channel media resource allocation result from the MF, and then the IMS AS may transfer a response to the MediaInstruction request to the DCSF. In an embodiment, the corresponding response message may include result information of the above-described operation and negotiation information related to MDC1 data channel media resource information.

In operation 316, the DCSF may store media resource information in a response message for a MediaInstruction request transferred from the IMS AS, and may transfer, to the IMS AS, a response message related to a data channel connection notification (SessionEventControl_Notify) request received from the IMS AS.

In operation 317, the IMS AS may transmit, to the S-CSCF, a SIP INVITE message including an updated SDP offer with added media information of the MF or enhanced MRF and information about a multiplexing-related indicator.

In operation 318, the S-CSCF may transmit, to a remote network and UE#2, a SIP INVITE message including an updated SDP offer, which includes media information of an MF or an enhanced MRF and multiplexing-related indication information.

In operation 319, based on the updated SDP offer information received in operation 318, a negotiation process of a terminating network and UE#2 for establishing a bootstrap data channel may be performed in a manner similar to that of an originating network.

In operation 320, when there is a requirement for an update or change related to a bootstrap data channel, UE #2 and a terminating network may transfer, to the originating network, an SDP response included in an 18X response message. Based on the received SDP response message, the MF or enhanced MRF may update data channel media resource information related to UE#2.

In operation 321, when there is no additional change, the terminating network and UE#2 may transmit, to an S-CSCF of the originating network, a 200 OK response message including SDP answer information.

In operation 322, upon receiving the 200 OK response message from the terminating network and UE#2, the S-CSCF may transmit, to the IMS AS, IMS data channel-related SDP answer information included in the 200 OK response message, if such information exists.

In operation 323, the IMS AS that has receives a 200 OK message from the S-CSCF may transfer a SessionEventControl_Notify message to the DCSF to notify of successful session connection-related event information.

In operations 324 and 325, upon receiving a response message for a corresponding successful session connection event notification from the DCSF, the IMS AS may transfer, to UE#1, a 200 OK message which includes bootstrap-related SDP answer information indicating that the bootstrap data channel connection establishment has been successfully completed.

In operations 326 (operations 326-1, 326-2, and 326-3) and 327 (operations 327-1, 327-2, and 327-3), operations for establishing connection of a bootstrap data channel may be performed among UE#1, UE#2, and an originating MF or an enhanced MRF. A UE that receives the application list including the application information supporting multiplexing may select an application supporting multiplexing according to a service user's selection or a network operator's policy. According to an embodiment, the UE may transfer an application request message to the DCSF through the MF or the enhanced MRF for the download of the corresponding application. In an embodiment, the MF or MRF may change a root URL to application-related URL information, based on replacement URL information received from the DCSF in operation 313, with respect to an application request message received from the UE.

Thereafter, the MF or the MRF may transfer the corresponding application request message received from the UE to the DCSF through the MDC1. According to an embodiment, the DCSF may provide an application list or appropriate data applications to UE#1 and UE#2 according to the UE's data channel processing capability and selection.

In an embodiment, when a requested data channel application is not available in the DCSF, the application may be requested from the data channel application server and then transferred to UE #1 and UE #2 through MDC1 and MDC3. According to an embodiment, through the above process, the UE may download an application received through an IMS data channel, and may simultaneously receive application-related information as application binding information. In an embodiment, the application-related information may include, for example, a bootstrap DC stream ID indicating a bootstrap channel through which the corresponding application is received.

In an embodiment, based on the bootstrap DC stream ID or the bootstrap DC ID, the UE may identify whether an application has been received from a local data channel server or a remote data channel server (e.g., a DCSF), and may provide, during an application data channel setup signaling procedure, information for connecting to an appropriate data channel server by including the identified information.

In operations 328 (operations 328-1, 328-2, and 328-3) and operation 329, an IMS data channel service may be used through a bootstrap data channel connection using an MF or an MRF in a terminating network, according to the location of the MF or MRF. A UE that receives an application list including application information supporting multiplexing may select an application supporting multiplexing according to a service user's selection or a network operator's policy. In an embodiment, each UE may then transfer an application request message to the terminating DCSF through an MF or an enhanced MRF on the terminating network for downloading the corresponding application.

In an embodiment, a terminating DCSF may provide an application list or appropriate data applications to UE#1 and UE#2 according to the data channel processing capability and selection of the UE. According to an embodiment, if the requested data channel application is not available in the DCSF, the data channel application may be requested from the data channel application server, and then transferred to UE #1 and UE #2 through MDC1 and MDC3. In an embodiment, the application-related information may include a bootstrap DC stream ID indicating a bootstrap channel through which the corresponding application has been received.

In an embodiment, based on the bootstrap DC stream ID or the bootstrap DC ID, the UE may identify whether an application has been received from a local data channel server or a remote data channel server (e.g., a DCSF), and may provide, during an application data channel setup signaling procedure, information for connecting to an appropriate data channel server by including the identified information. In operation 330, a procedure subsequent to operation 329 may be performed.

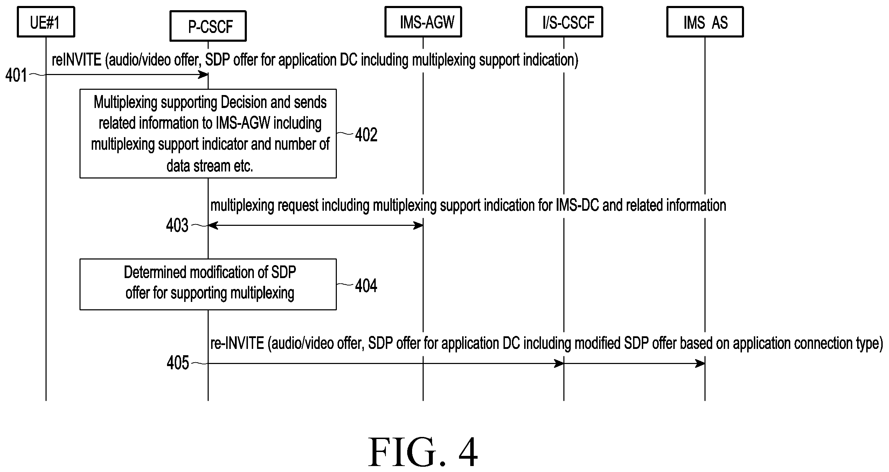

FIG. 4 is a flowchart illustrating an operation of a P-CSCF for supporting a multiplexing-based application data channel service, in response to a request for the multiplexing-based application data channel service from a UE during an application data channel setup signaling procedure, according to an embodiment of the disclosure.

In operation 401, a UE (UE #1) may transmit, to the P-CSCF, a SIP re-INVITE message for establishing an application data channel connection. In an embodiment, in order to establish the application data channel connection, the UE may transmit, to a network through the SIP re-INVITE message, an SDP offer including application-related binding information such as an application-related stream ID and an application ID received through a bootstrap data channel connection process, and additional information such as a bootstrap DC stream ID, thereby performing a data channel session connection request operation. In an embodiment, an SDP offer for establishing an application data channel connection that supports multiplexing may include information (multiplexing support indication) indicating that data streams of a plurality of applications are received by the UE through a single port. In this case, one application may include one or more data streams. In addition, a single SDP offer may include information on data streams delivered to different endpoints or data streams delivered to a same endpoint. In this case, the different endpoints may represent different application connection types (e.g., P2A and P2P) or locations of an MF (local MF and remote MF). In an embodiment, information for establishing connections to MFs having different endpoints may be distinguished by using a bootstrap stream ID included in binding information or identification information for each application.

In operation 402, upon receiving the SIP re-INVITE including an SDP offer indicating that a plurality of applications are delivered through a single port, the P-CSCF may determine an operation for supporting a corresponding multiplexing function. In an embodiment, in order to support the multiplexing function, the P-CSCF may configure an IMS-AGW through an application level gateway (IMS-ALG) within the P-CSCF and may request relevant information from the IMS-AGW.

In operation 403, the P-CSCF may request, through the IMS-ALG, the IMS-AGW to allocate a number of ports corresponding to a number of data streams associated with a single data stream transmitted from the UE, and to transmit relevant information related thereto, in order to support multiplexing and demultiplexing functions for the single data stream. In an embodiment, the P-CSCF may transmit, to the IMS-AGW, a request for multiplexing, that is, a request for transmission of IMS-DC and relevant information, and the request may include a multiplexing support indication. The IMS-AGW may allocate data stream-related information, based on data stream information of applications included in a single m-line in an SDP offer, and may transmit the allocated data stream-related information to the P-CSCF.

In operation 404, the P-CSCF may distinguish information included in an SDP offer of the SIP re-INVITE, which has been received from UE #1, according to an application connection type. In an embodiment, the P-CSCF may update the SDP offer, based on data-stream-specific allocation information (e.g., an IP address, a port, etc.) received from the IMS-AGW. For example, the P-CSCF may receive a message including, in an SDP offer, a connection request toward a remote UE and a connection request toward an application server according to an application connection type. In this case, in an embodiment, to support multiplexing, the P-CSCF may update the SDP offer information of the application DC by separating m-lines for establishing a connection to a remote UE and a connection to an application according to the application connection type in the corresponding SDP offer. Alternatively, when different remote endpoints are used, the P-CSCF may update the SDP offer information of the application DC by separating m-lines in the SDP offer for each endpoint.

In operation 405, a modified SDP offer message based on IMS-AGW allocation information for supporting multiplexing may be transferred from the P-CSCF to the IMS AS through the S-CSCF. In an embodiment, the modified SDP offer message may be updated based on an application connection type. In an embodiment, upon receiving, from the P-CSCF, the SIP re-INVITE information including updated SDP offer information for supporting multiplexing, the S-CSCF may determine whether to accept multiplexing of data streams using a multiplexing application of the UE, based on subscription information of a service user and whether multiplexing is supported by a network. In an embodiment, if a multiplexing support request of the service user is accepted, the S-CSCF may transfer, to the IMS AS, an application data channel connection request message including the updated SDP offer. In an embodiment, the IMS AS may first identify, from an HSS, whether the UE or subscriber is allowed to use a data channel service through an application data channel connection based on multiplexing, and may then determine whether to accept the application data channel connection request.

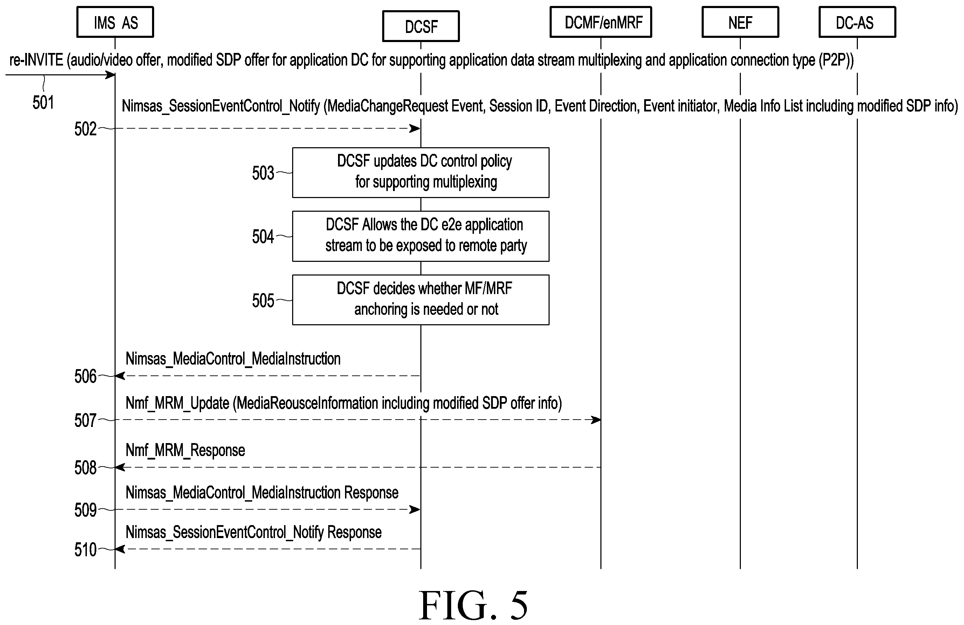

FIG. 5 is a flowchart illustrating an application data channel setup signaling procedure based on an application data channel connection type, performed by an IMS application server (IMS AS) according to an embodiment of the disclosure.

FIG. 5 is a flowchart illustrating a method for transferring information for updating a DCSF policy and updating relevant media resources in an MF entity for performing an operation of connecting an application data channel in consideration of a person-to-person (P2P) connection type according to an embodiment of the disclosure.

In operation 501, the IMS AS may receive, from the P-CSCF through the S-CSCF, an updated SDP offer message based on IMS-AGW allocation information for supporting multiplexing. According to an embodiment, the IMS-AS may request an application data channel connection to the DCSF, based on an application data channel connection request message received from the S-CSCF, the message including updated SDP offer information for supporting multiplexing and a bootstrap stream ID. In an embodiment, when an application data channel connection is established through the local DCSF based on the bootstrap stream ID, the IMS-AS may determine to generate a session event control notification (SessionEvent_Control_Notify) message at a local IMS-AS. In an embodiment, when an application data channel connection is established through a remote DCSF based on a bootstrap stream ID, the IMS-AS may retransmit, through the S-CSCF, the updated SDP offer information received from the S-CSCF, and may request that the updated SDP offer information be delivered to a remote network. In an embodiment, the S-CSCF in the remote network that has received the updated SDP offer may request establishment of an application data channel connection.

In an embodiment, when a corresponding service user is able to use a service based on an IMS data channel, the IMS-AS may perform a media data channel connection operation for transmitting/receiving application data by transmitting a session connection request for application data channel setup to a data channel signaling function (DCSF). In an embodiment, the IMS AS may select a DCSF (e.g., a local DCSF or a remote DCSF) based on the bootstrap DC ID received during the bootstrap data channel connection process. In this embodiment, it is assumed that an application data channel connection operation is performed using the local DCSF and the MF.

In operation 502, the IMS-AS may transfer a session event control notification (SessionEventControl_Notify) message to the DCSF, the message including information such as a MediaChangeRequest event, Session ID, Event Direction, Event initiator, Media Info List, and the like, for an application data channel connection request. In an embodiment, the Media Info List may include IMS-AGW-related information (modified SDP info) of the corresponding application-related data stream that is updated and transferred through the P-CSCF.

In operation 503, after receiving the message including the media change request event, the DCSF may perform an update of a data channel control policy for supporting multiplexing and establishing an application data channel connection.

In operation 504, the DCSF may determine to transfer information related to an e2e application data channel connection to the remote network and the UE, based on media-related information received from the IMS AS, when an application data channel connection type is a P2P connection type. In an embodiment, the DSCF may permit a DC e2e application stream to be exposed to a remote party.

In operation 505, whether to update or add data channel media resources in the MF entity for establishing connection of a new application data channel requested by the UE may be determined according to whether anchoring of the MF is required. In an embodiment, even in the case where the application connection type is P2P, anchoring through a separate MF may be required due to a protocol change when establishing connection of a new application data channel in the DCSF.

In this case, in operation 506, the DCSF may update the data channel media resource (e.g., port information for anchoring media streams, etc.) of the MF entity and the SDP offer to be transferred to the remote network and the UE, and then transfer the same to the IMS AS. In an embodiment, if a connection between UEs through anchoring by a separate MF is not required, the DCSF may update data channel policy information, based on application data channel information, and then transfer the updated data channel policy information to the IMS-AS.

In operation 507, the IMS-AS, having received the updated data channel media resource and the updated SDP offer info to be transferred to the remote network and the UE, may transfer the same to the MF to perform a media resource allocation operation for a P2P connection operation through MF anchoring.

In operation 508, the MF or MRF may transfer, to the IMS AS, anchoring-related information (e.g., port info, etc.) of an application data channel at the MF or the MRF for establishing a connection through MF or MRF anchoring.

In operation 509, the IMS AS may transfer an Nimsas_MediaControl_MediaInstruction response message to the DCSF, the response message including whether an update of media resources of the MF or MRF entity for the application data channel connection using the MF or MRF anchoring has been successfully performed, and relevant information allocated for anchoring of the corresponding application data channel in the MF or MRF.

In operation 510, the DCSF may update the SDP offer information to be transferred to the remote network and the UE and may transfer the same to the IMS AS. If the application data channel connection is performed using an MF or MRF anchoring, the DCSF may update an SDP offer based on endpoint information of each MF or MRF, and then transfer the same to the IMS AS. When it is determined in operation 505 to perform an e2e application data channel connection without separate MF or MRF anchoring, operations 506 to 509 may be omitted.

When using a multiplexing-based data channel service using the IMS-AGW according to an embodiment of the disclosure, the IMS AS may transfer, to a remote network, a SIP re-INVITE message including endpoint information included in the SDP offer generated based on IMS-AGW endpoint information received from the P-CSCF, for establishing an application data channel connection without separate MF or MRF anchoring.

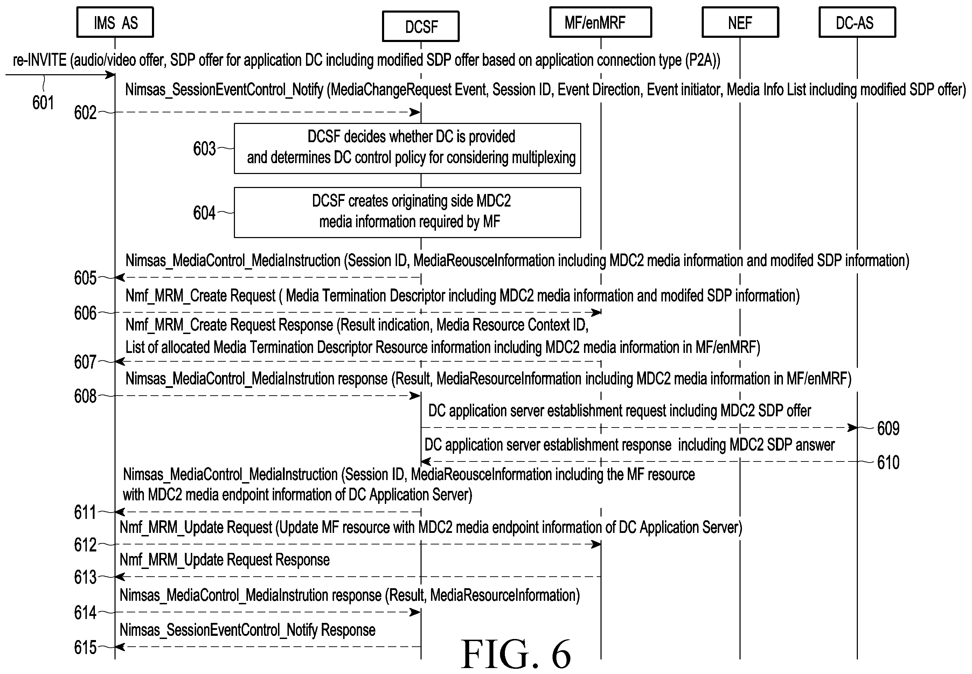

FIG. 6 is a flowchart illustrating an application data channel setup signaling procedure based on an application data channel connection type, performed by an Internet protocol (IP) multimedia subsystem application server (IMS AS) according to an embodiment of the disclosure.

FIG. 6 is a flowchart illustrating a method for transferring information for updating a DCSF policy and updating relevant media resources in an MF entity for performing an operation of connecting an application data channel in consideration of a person-to-application (P2A) connection type according to an embodiment of the disclosure.

In operation 601, the IMS AS may receive, from the P-CSCF through the S-CSCF, an updated SDP offer message based on IMS-AGW allocation information for supporting multiplexing. According to an embodiment, the IMS-AS performs a request for an application data channel connection to the DCSF, based on an application data channel connection request message received from the S-CSCF, the message including updated SDP offer information for supporting multiplexing and a bootstrap stream ID. In an embodiment, the IMS-AS may determine to generate a session event control notification (SessionEvent_Control_Notify) message at a local IMS-AS when establishing an application data channel connection through the local DCSF, based on the bootstrap stream ID. In an embodiment, when an application data channel connection is established through a remote DCSF based on a bootstrap stream ID, the IMS-AS may retransmit, through the S-CSCF, the updated SDP offer information received from the S-CSCF, and may request that the updated SDP offer information be delivered to a remote network. In an embodiment, the S-CSCF in the remote network that has received the updated SDP offer may request to establish the application data channel connection.

When a corresponding service user is able to use a service based on an IMS data channel, the IMS-AS may perform a media data channel connection operation for transmitting/receiving application data by transmitting a session connection request for application data channel setup to a data channel signaling function (DCSF). In an embodiment, the IMS AS may select a DCSF (e.g., a local DCSF or a remote DCSF) based on the bootstrap DC ID received during the bootstrap data channel connection process. In this embodiment, it is assumed that an application data channel connection operation is performed using the local DCSF and the MF.

In operation 602, the IMS-AS may transfer a session event control notification (SessionEventControl_Notify) message to the DCSF, the message including information such as a MediaChangeRequest event, Session ID, Event Direction, Event initiator, Media Info List, and the like, for an application data channel connection request. In an embodiment, the Media Info List may include IMS-AGW-related information of the corresponding application-related data stream that is updated and transferred through the P-CSCF.

In operation 603, after receiving information including the media change request event, the DCSF may perform an update of a data channel control policy for application data channel connection in consideration of multiplexing, based on relevant parameters included in the session event control notification message.

In operation 604, the DCSF may generate relevant information for a data channel application server connection, if an application data channel connection type is a P2A connection type, based on media-related information received from the IMS AS. In an embodiment, the DCSF may, based on relevant information regarding the corresponding application data channel, determine the generation of data channel media resource information including media data channel connection information (MDC2 Endpoint), and the update of a data channel control policy, when the connection type of the corresponding application data channel is an application data channel using the data channel application server.

In operation 605, the DCSF may include information related to an MF for establishing an application data channel connection and a data channel application server in data channel media resource information, and may transmit the data channel media resource information to the IMS AS through media-related instruction (MediaInstruction) information for media control. In an embodiment, the media resource information may include information for determining whether to update or add data channel media resources in an MF entity. In an embodiment, the media resource information transmitted from the DCSF may include SDP offer information updated by a P-CSCF to support multiplexing. In an embodiment, the IMS AS may forward packets in a user-plane data channel from each UE to an MF or an enhanced MRF (enMRF), and the MF or the enMRF may receive, from the DCSF, media resource information including media instruction information for forwarding the packets to a data channel application server using an MDC2 interface. In an embodiment, the IMS AS may transmit, to the MF, a request for allocation of the corresponding media resource information and a request for MDC2 media information. By using the MDC2 media information request, the MF may allocate data channel media resources for forwarding application data transmitted from a UE to the data channel application server.

In operation 606, the IMS AS that has received data channel media resources including MDC2 media information and updated SDP information may transfer, to the MF or enMRF, media resource information for establishing an application data channel connection in consideration of a P2A connection type, through a media resource management request (Nmf_MRM_Create Request) message. If application data of the UE is to be transferred to the data channel application server using an MRF, the UE may request allocation of relevant data channel media resources from the MRF through an Mr'/Cr interface.

In operation 607, the MF may transfer the MDC2 media information of the MF and media resource allocation result information to the IMS AS through a media resource management request response (Nmf_MRM_Create Request Response) message, in consideration of the P2A connection type.

In operation 608, the IMS AS may transfer, to the DCSF, media resource information of an MF entity for a P2A connection, the media resource information including MDC2 media information received from the MF or enMRF.

In operations 609 and 610, the DCSF may store the media resource information and then transfer a P2A application data channel establishment request to a data channel application server (DC-AS) through DC3 or DC4. In an embodiment, when the data channel application server accepts the application data channel establishment request transmitted through the above procedure, the data channel application server may transfer MDC2-related SDP response information (MDC2 media endpoint information) to the DCSF.

In operation 611, the DCSF may perform an update of a data channel media resource, based on MDC2 media endpoint information of the data channel application server received from the data channel application server, and may then transfer, to the IMS AS, updated data channel media resource information, based on the MDC2-related SDP response information (MDC2 media endpoint information).

In operations 612 and 613, the IMS AS may request an update of resources of the media function entity, based on the updated data channel media resource information, and may receive the corresponding update result value from the MF.

In operation 614, the IMS AS may receive the update result value from the MF, and may then notify the DCSF of response information regarding a media control-related instruction, the response information including a result of a successful update of a data channel-related media resource.

In operation 615, after being notified of response information regarding the media control-related instruction, the DCSF may transfer, to the IMS AS, a response message including an updated SDP answer based on MDC2-related information for an application data channel connection in consideration of a P2A connection. In an embodiment, when establishing an application data channel connection based on a P2A connection type, the IMS AS, after receiving a data channel-related response message from the DCSF, may wait for a response message transferred from a remote network, add the received response message to a 200 OK response message, and transmit the 200 OK response message to UE #1. In addition, when transferring a SIP re-INVITE to the remote network, the IMS AS may delete SDP offer information related to application data channel and transfer the SIP re-INVITE including only SDP offer information related to video or audio.

In an embodiment, through the above-described procedure, the IMS AS may perform an operation of updating application data channel-related information in consideration of a P2A connection type and allocating media resources in the MF entity, and may, based on results thereof, transfer a SIP re-INVITE message including an updated SDP offer to a remote network through the S-CSCF.

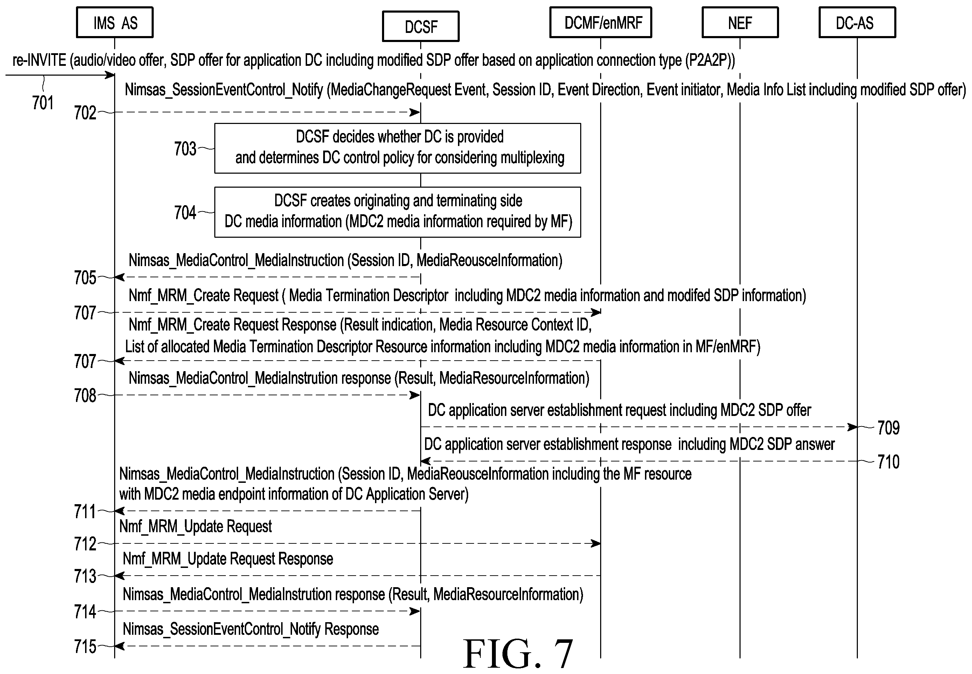

FIG. 7 is a flowchart illustrating an application data channel setup signaling procedure based on an application data channel connection type, performed by an IP multimedia subsystem application server (IMS AS) according to an embodiment of the disclosure.

FIG. 7 is a flowchart illustrating a method for transferring information for updating a DCSF policy and updating relevant media resources in an MF entity for performing an operation of connecting an application data channel in consideration of a person to application to person (P2A2P) connection type according to an embodiment of the disclosure.

In operation 701, the IMS AS may receive, from the P-CSCF through the S-CSCF, an updated SDP offer message based on IMS-AGW allocation information for supporting multiplexing. According to an embodiment, the IMS-AS performs a request for an application data channel connection to the DCSF, based on an application data channel connection request message received from the S-CSCF, the message including updated SDP offer information for supporting multiplexing and a bootstrap stream ID. In an embodiment, the IMS-AS may determine to generate a session event control notification (SessionEvent_Control_Notify) message at a local IMS-AS when establishing an application data channel connection through the local DCSF, based on the bootstrap stream ID. In an embodiment, when an application data channel connection is established through a remote DCSF based on a bootstrap stream ID, the IMS-AS may retransmit, through the S-CSCF, the updated SDP offer information received from the S-CSCF, and may request the updated SDP offer information be delivered to a remote network. In an embodiment, the S-CSCF in the remote network that has received the updated SDP offer may request to establish the application data channel connection.

In an embodiment, when a corresponding service user is able to use a service based on an IMS data channel, the IMS-AS may perform a media data channel connection operation for transmitting/receiving application data by transmitting a session connection request for application data channel setup to a data channel signaling function (DCSF). In an embodiment, the IMS AS may select a DCSF (e.g., a local DCSF or a remote DCSF) based on the bootstrap DC ID received during the bootstrap data channel connection process. In this embodiment, it is assumed that an application data channel connection operation is performed using the local DCSF and the MF.

In operation 702, the IMS-AS may transfer a session event control notification (SessionEventControl_Notify) message to the DCSF, the message including information such as a MediaChangeRequest event, Session ID, Event Direction, Event initiator, Media Info List, and the like, for an application data channel connection request. In an embodiment, the Media Info List may include IMS-AGW-related information of the corresponding application-related data stream that is updated and transferred through the P-CSCF.

In operation 703, after receiving information including the media change request event, the DCSF may perform a data channel control policy update for application data channel connection in consideration of multiplexing.

In operation 704, the DCSF may generate relevant information for a data channel application server connection, if an application data channel connection type is a P2A connection type, based on media-related information received from the IMS AS. In an embodiment, the DCSF may, based on relevant information regarding the corresponding application data channel, determine the generation of data channel media resource information including media data channel connection information for each UE (MDC2 Endpoint per UE), and the update of a data channel control policy, when the connection type of the corresponding application data channel is an application data channel using the data channel application server.

In operation 705, the DCSF may include information related to an MF for establishing an application data channel connection and a data channel application server in data channel media resource information, and may transmit the data channel media resource information to the IMS AS through media-related instruction (MediaInstruction) information for media control. In an embodiment, the media resource information may include information for determining whether to update or add data channel media resources in an MF entity. In an embodiment, the media resource information transmitted from the DCSF may include SDP offer information updated by a P-CSCF to support multiplexing. In an embodiment, the IMS AS may forward packets in a user-plane data channel from each UE to an MF or an enMRF, and the MF or the enMRF may receive, from the DCSF, media resource information including media instruction information for forwarding the packets to a data channel application server using an MDC2 interface. In an embodiment, the IMS AS may transmit, to the MF, a request for allocation of the corresponding media resource information and a request for MDC2 media information. In an embodiment, by using the corresponding MDC2 media information request, the MF may allocate data channel media resources for forwarding application data transmitted from a UE to a data channel application server. Unlike the embodiment for establishing an application data channel connection based on a P2A connection type shown in FIG. 6, for establishing an application data channel connection based on a P2A2P connection type shown in FIG. 7, the MF may perform generation and allocation of MDC2 media information for each UE.

In operation 706, the IMS AS that has received data channel media resources including MDC2 media information and updated SDP information may transfer, to the MF or enMRF, media resource information for establishing an application data channel connection in consideration of a P2A2P connection type, through a media resource management request (Nmf_MRM_Create Request) message. If application data of the UE is to be transferred to the data channel application server using an MRF, the UE may request allocation of relevant data channel media resources from the MRF through an Mr'/Cr interface.

In operation 707, the MF may transfer, to the IMS AS, the MDC2 media information and media resource allocation result information for each UE of the MF through a media resource management request response (Nmf_MRM_Create Request Response) message, in consideration of the P2A2P connection type.

In operation 708, the IMS AS may transfer, to the DCSF, media resource information of an MF entity for a P2A2P connection, the media resource information including MDC2 media information received from the MF or enMRF.

In operation 709, the DCSF may store the media resource information and then transfer a P2A2P application data channel establishment request to a data channel application server through DC3 or DC4. In operation 710, when the data channel application server accepts the application data channel establishment request transmitted through the above procedure, the data channel application server may transfer MDC2-related SDP response information for each UE (MDC2 media endpoint information) to the DCSF.

In operation 711, the DCSF may update a data channel media resource, based on MDC2 media endpoint information for each UE of the data channel application server received from the data channel application server, and may then transfer, to the IMS AS, updated data channel media resource information, based on the MDC2-related SDP response information (MDC2 media endpoint information).

In operations 712 and 713, the IMS AS may request an update of resources of the media function entity, based on the updated data channel media resource information, and may receive the corresponding update result value from the MF.

In operation 714, the IMS AS may receive the update result value from the MF, and may then notify the DCSF of response information regarding a media control-related instruction, the response information including a result of a successful update of a data channel-related media resource.

In operation 715, after being notified of response information regarding the media control-related instruction, the DCSF may transfer, to the IMS AS, a response message including an SDP offer for establishing an application data channel connection, the SDP offer being updated based on MDC2-related information in consideration of a P2A2P connection.

Through the above-described procedure, the IMS AS may perform an operation of updating application data channel-related information in consideration of a P2A2P connection type and allocating media resources in the MF entity, and may, based on results thereof, transfer a SIP re-INVITE message including an updated SDP offer to a remote network through the S-CSCF.

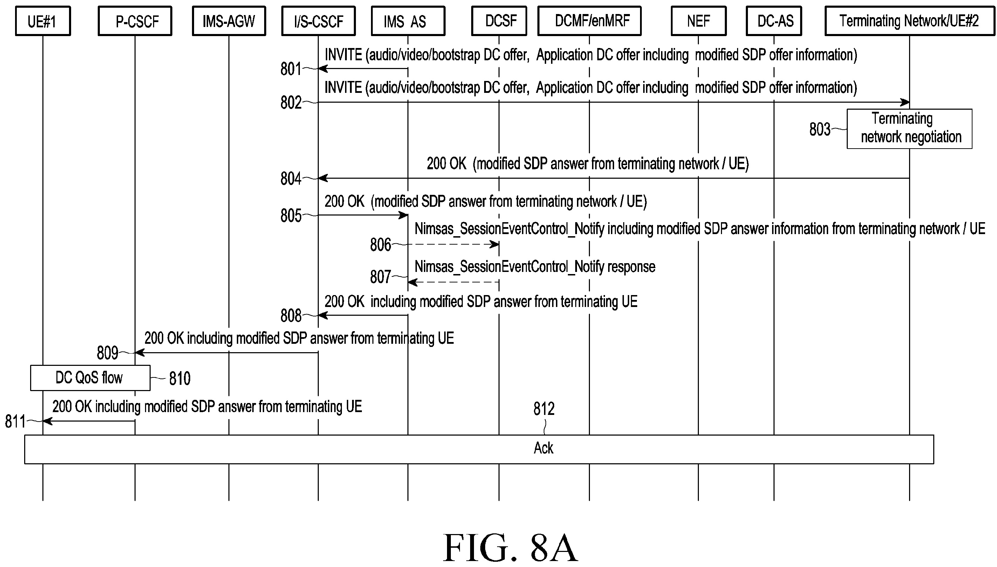

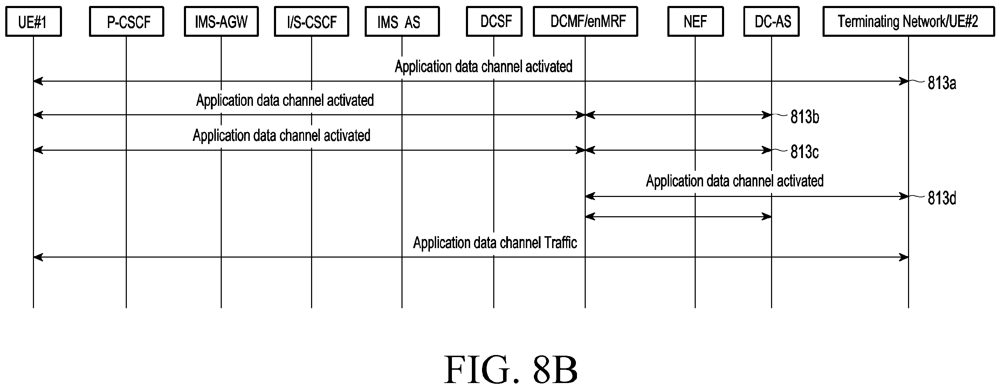

FIG. 8 is a flowchart illustrating an application data channel setup signaling procedure in which an Internet protocol (IP) multimedia subsystem application server (IMS AS) transfers, to a remote network, information related to establishing an application data channel connection and receives a requested result from the remote network, according to an embodiment of the disclosure.

Before operations 801 and 802, the IMS AS may receive, from the DCSF, data channel resource allocation and relevant information according to an application data channel connection type, as described with reference to FIGS. 5, 6, and 7. In operations 801 and 802, the IMS AS may transfer, to a remote network, a SIP re-INVITE message including updated SDP offer information based on the information received from the DCSF. In an embodiment, in case of establishing an application data channel connection using MF or MRF anchoring in a P2P connection type, the SDP offer may be updated based on endpoint information of each MF or MRF. In an embodiment, for an application data channel connection that does not use separate MF or MRF anchoring in a P2P connection type, the IMS AS may transfer, to a remote network, a SIP re-INVITE message including endpoint information in an SDP offer generated based on endpoint information of an IMS-AGW received from the P-CSCF. In an embodiment, when the connection type is P2A, the corresponding re-INVITE message may not include an SDP offer related to an application data channel.

In operation 803, based on the SIP re-INVITE information including the updated SDP offer information obtained in operation 802, the terminating network and UE #2 may perform a negotiation process for establishing an application data channel connection. According to an embodiment, a multiplexing-based application data channel connection may be determined based on whether multiplexing is supported by a remote UE (UE#2) and a remote network. In an embodiment, when the remote UE and the remote network support a multiplexing-based application data channel, the remote UE and the remote network may select an application supporting multiplexing and establish an application data channel connection by using the selected application. In an embodiment, when at least one of the remote UE or the remote network does not support multiplexing, the remote UE may select a non-multiplexing-supported general application from an application list received during a bootstrap data channel connection procedure.

In operations 804 and 805, when multiplexing is supported by a remote UE (UE#2) and a remote network, updated SDP answer information including data stream-related information of the IMS-AGW in the remote network may be transferred to an originating network through a 200 OK response message. In an embodiment, an S-CSCF may transfer information included in the 200 OK response message transmitted by the remote network and the UE to the IMS AS. In an embodiment, in case that at least one of the remote UE or the remote network does not support multiplexing, SDP answer information including data stream-related information of the remote UE may be transferred to the originating network through the 200 OK response message.

In an embodiment, in the case of a response to an application data channel connection request using a P2A connection type, an audio- and video-related SDP response may be included in a 200 OK response message and transferred to the IMS AS through the S-CSCF. According to an embodiment, the S-CSCF may transfer the corresponding 200 OK response message to the IMS AS, and the IMS AS that has received the same may notify the DCSF of a result of a successful media change request event.

In operation 806, the IMS AS may notify the DCSF that the application data channel connection has been successfully completed, based on the SDP Answer information received from the remote network and the UE.

In operation 807, the DCSF that has received the session event control notification message in operation 806 may transfer the response to the corresponding notification message to the IMS AS.

In operations 808 and 809, the IMS AS may transfer, to the P-CSCF through the S-CSCF, a 200 OK message including SDP answer information received from the remote network and the UE. In an embodiment, in the case of an application data channel using a P2A connection type, the IMS AS may add, to a 200 OK response message including audio- and video-related SDP responses received from the remote network and UE #2, an SDP answer for a P2A connection between UE #1 and a data channel application server (DC-AS), and may transfer the same to the S-CSCF and the P-CSCF.

In operation 810, the P-CSCF may transfer, to a PCF, application data channel information included in the SDP answer for QoS allocation, based on information in the corresponding 200 OK message, so as to obtain an appropriate QoS allocation.

In operation 811, the P-CSCF, having received QoS information based on the application data channel information, may finally transfer the 200 OK message to the UE.

In operation 812, UE #1 may transmit, to a remote network and UE #2, an ACK message indicating that establishment of an application data channel has been successfully completed, based on information received from the remote network and the UE.

Operation 813a indicates an application data channel connection in consideration of a P2P connection type, in which an application data channel connection is established through a P2P connection between UE #1 and UE #2, such that UE #1 and UE #2 are able to transmit and receive data through the application data channel. In an embodiment, when UE #1 and UE #2 use a P2P connection through MF anchoring, application data information (e.g., port information of UE #2, etc.) received from UE #2 may be transmitted from the IMS AS to an MF through a data channel media resource update procedure, and based on a result thereof, the IMS AS may notify the DCSF that a successful application data channel connection has been established. Thereafter, the IMS AS may transmit the 200 OK information to the P-CSCF via an S-CSCF based on a response message from the DCSF, and may finally complete establishment of the application data channel connection through the P2P connection via MF anchoring by performing appropriate QoS allocation by using application data channel information included in the 200 OK message.

Operation 813b indicates an application data channel connection in consideration of a P2A connection type, in which UE #1 may use an IMS data channel-related service via an application data channel by using a data channel application server and MDC2 while using an IMS call session related to audio or video with UE #2.

Operation 813c indicates an application data channel connection in consideration of a P2A2P connection type, in which UE #1 and UE #2 may transmit and receive application data via the data channel application server through the MF or the enMRF.

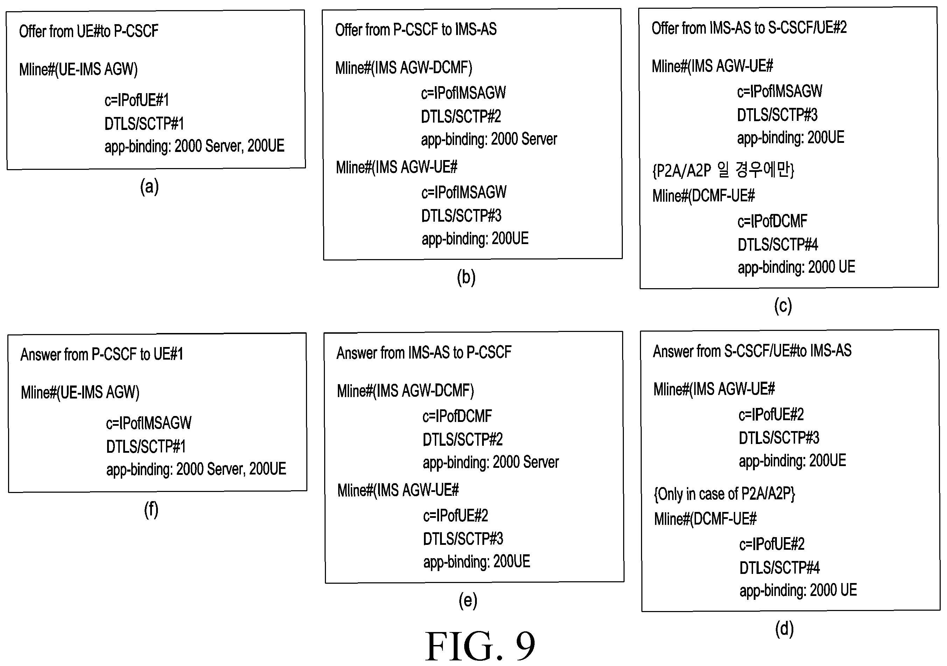

FIG. 9 illustrates an example of SDP offer and SDP answer information transferred through session request and session response messages that support multiplexing for an application data channel connection request from a UE, according to an embodiment of the disclosure.
(a) of FIG. 9 illustrates an example of SDP offer information transferred from UE#1 to a P-CSCF. A single SDP offer includes one m-line, and includes configuration information of the corresponding application, such as IP information of UE #1 and information on datagram transport layer security (DTLS)/stream control transmission protocol (SCTP) #1. In addition, it may be seen that an application data channel connection requested through the SDP offer includes a P2A connection type (app-binding: 2000) and a P2P connection type (app-binding: 2001). Based on this information, it may be understood that data streams of a plurality of applications are requested through a single DTLS connection.

In (b) of FIG. 9, the P-CSCF, having received a SIP re-INVITE message including the SDP offer of (a) in FIG. 9, may recognize that the corresponding connection request is a multiplexing-based application data channel connection request. According to an embodiment, the P-CSCF may transmit and request information related to an IMS-AGW through an IMS-application level gateway (IMS-ALG). The P-CSCF may, based on the corresponding request, determine to generate and transfer the indicator information for requesting multiplexing support from the IMS-AGW, and information related to multiplexing of the application data channel. According to an embodiment, the P-CSCF may request DTLS/SCTP connections corresponding to the number of data streams configuring each application. In (b) of FIG. 9, it is assumed that each application has one data stream and that one application exists for each application data channel connection type. That is, the SDP offer may represent a request in which one data stream exists for each application data channel type. Upon receiving the corresponding information, the IMS-AGW may determine two DTLS/SCTP connections, and may transfer the corresponding data stream-related information (e.g., c=IPofIMSAGW) to the P-CSCF, so that the P-CSCF may generate an updated SDP offer, or the IMS-AGW may transfer the updated SDP offer information to the P-CSCF.

In an embodiment of the disclosure, based on one m-line, application data channel connections are separated into individual m-lines according to connection types, where m-line #2 is used for a P2A connection type and m-line #3 is used for a P2P connection type. The SDP offer may be updated using data stream-related information received from the IMS-AGW, and the updated SDP offer may be transferred to the IMS AS.

In (c) of FIG. 9, in case that an application data channel connection type is P2A, which requires a connection to a data channel application server, the IMS AS may receive relevant information from the MF or enMRF and the DCSF, and may update an SDP offer based on the received information. A single multiplexed data stream may include connection requests for multiple application data channel connection types, and a separate information reception process and an SDP update process may be performed for each application data channel connection type. In an embodiment of the disclosure, in case of a P2P scenario, an application data traffic transmission scenario may be assumed in which application data is transmitted through an e2e application data channel connection between UEs without considering MF or enMRF anchoring. In an embodiment, when establishing an application data channel connection based on a P2P connection type through an e2e application data channel connection between UEs, the IMS AS may transmit, to a remote network, modified SDP offer information (m-line #3), based on IMS-AGW-based data stream information received from the P-CSCF, without performing an additional update. In an embodiment, when an application data channel connection request is based on a P2A2P connection type, the IMS AS may update an SDP offer by reflecting updated media resource information, in which m-line #2 is updated in consideration of a connection between the MF and UE#2, and may update or replace a SIP re-INVITE message with the updated SDP offer (m-line #4) and transmit the same to a remote network.

(d) of FIG. 9 illustrates an example of SDP answer information transferred to the IMS AS, based on information received from a remote network. Response information of a remote UE, including IP information of UE#2 and DTLS/SCTP-related information for establishing an application data channel connection based on a P2P connection between UEs, may be included in m-line #3 and transferred to the IMS AS through the S-CSCF. In an embodiment, response information of the remote UE, including IP information of UE#2 and DTLS/SCTP-related information for establishing an application data channel connection based on a P2A2P connection, may be included in m-line #4 and transferred to the IMS AS through the S-CSCF.

(e) of FIG. 9 illustrates an example of SDP answer information transmitted from the IMS AS to the DCSF, based on information received from a remote network, to indicate successful completion of an application data channel connection and to deliver information related to the remote network and a UE (UE#2). Based on the corresponding information, the DCSF may perform an update of media resource information within the MF. Thereafter, the IMS AS may modify or update SDP offer information based on a 200 OK response message received from the remote UE and the remote network, and may transmit the 200 OK response message to UE#1. As illustrated in (e) of FIG. 9, in the case of a P2P connection type, no separate update of SDP answer information is performed. However, in the case of an application data channel connection using a connection to a data channel application server, SDP offer information received from the remote network may be updated based on MF-related information and transmitted. In addition, in order to utilize a DTLS/SCTP connection between the IMS-AGW and the MF, relevant information may be updated by the IMS AS or the DCSF and transmitted as an SDP answer included in a 200 OK response message transmitted to UE#1. The P-CSCF that has received a 200 OK response message including an SDP answer, as shown in the example of (e) of FIG. 9, may transfer the corresponding SDP answer information to the IMS-AGW, thereby completing an application data channel connection operation in consideration of multiplexing.

As illustrated in (f) of FIG. 9, after completing an application data channel connection operation in consideration of QoS allocation and multiplexing, the P-CSCF may determine to update or modify SDP answer information including IMS-AGW-related information (c=IPofIMSAGW) to be delivered to UE#1.

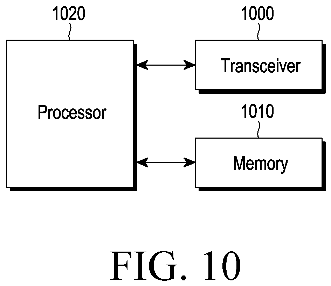

FIG. 10 illustrates a structure of a network entity according to an embodiment of the disclosure.

The network entity illustrated in FIG. 10 may include the network entities set forth herein, such as the P-CSCF, IMS, AS, IMS-AGW, and S-CSCF.

The network entity according to an embodiment of the disclosure may include a processor 1020 which controls the overall operation of the network entity, a transceiver 1000 which includes a transmitter and a receiver, and memory 1010. Of course, the example given above is not limiting, and the network node may include a smaller or larger number of components than the components illustrated in FIG. 10.

According to an embodiment of the disclosure, the transceiver 1000 may transmit/receive signals with network entities or other network nodes. The signals transmitted/received with network entities may include control information and data. In addition, the transceiver 1000 may receive signals through a radio channel, output the same to the processor 1020, and transmit signals output from the processor 1020 through the radio channel.

According to an embodiment of the disclosure, the processor 1020 may be configured to control receiving a data channel session connection request message including session description protocol (SDP) offer information from a user equipment (UE). In an embodiment, the SDP offer information may include information related to multiplexing. According to an embodiment, the processor 1020 may be configured to control transmission of a request for data stream-related information including the SDP offer information to an IMS application gateway (IMS-AGW) entity, reception, from the IMS-AGW entity, of the data stream-related information for supporting multiplexing, the data stream-related information being based on the SDP offer information, and updating of the SDP offer information based on the data stream-related information for supporting multiplexing.

According to an embodiment of the disclosure, the multiplexing-related information may indicate that data streams of a plurality of applications are configured to be received by a UE through a single port. According to an embodiment, the processor 1020 may be configured to update the SDP offer information, based on application connection type information included in the SDP offer, in order to support the multiplexing.

According to an embodiment, the processor 1020 may be configured to control the transmission of the updated SDP offer to an IMS application server (AS). In an embodiment, the updated SDP offer information may be used to update a data channel control policy.

According to an embodiment of the disclosure, the processor 1020 may be configured to control reception of a request for data stream-related information including multiplexing-related information from a proxy-call state control function (P-CSCF) entity, and control transmission of the data stream-related information based on the multiplexing-related information to the P-CSCF. In an embodiment, the data stream-related information may be used to update SDP offer information received from a user equipment (UE). According to an embodiment, the SDP offer information may include the multiplexing-related information.

According to an embodiment of the disclosure, a method of an Internet protocol (IP) multimedia subsystem application server (IMS AS) entity in a wireless communication system includes transferring multiplexing requirement information, based on service requirement information, transmitting, to a network repository function (NRF) entity, a request message for discovery of a media function (MF) entity, the request message including the multiplexing requirement information, and receiving, from the NRF entity, a response message including information related to an MF entity selected based on the multiplexing requirement information, wherein the service requirement information includes multiplexing requirement information received from a UE.

According to an embodiment of the disclosure, a method of a proxy-call state control function repository function (P-CSCF) entity in a wireless communication system may include receiving, from a UE, a call session connection request message using SDP offer information including multiplexing requirement information, and transmitting, to an IMS AS entity, an SDP offer including multiplexing requirement information for data stream multiplexing for each application type (e.g., person-to-person (P2P), person-to-application (P2A), and person-to-application-to-person (P2A2P)), based on the multiplexing requirement information, wherein the multiplexing requirement information includes connection information between a media function entity and a remote UE (e.g., UE #2) in case that the application type is P2A or P2A2P, and wherein, based on information included in modified SDP offer information in a SIP INVITE message transmitted from the IMS AS to a terminating network/UE based on the multiplexing requirement information, the P-CSCF receives a 200 OK message including an SDP response (answer) message transmitted from a remote UE, the SDP response message including mapping information among the remote UE, the MF, and the IMS -AGW.

According to an embodiment of the disclosure, an Internet protocol (IP) multimedia subsystem application server (IMS AS) entity in a wireless communication system includes a transceiver, and at least one processor, wherein the at least one processor is configured to receive, from a UE, an SDP offer including multiplexing requirement information, the SDP offer being based on service requirement information, transmit, to a data channel signaling function (DCSF), a request message for discovery of an application supporting multiplexing, based on the multiplexing requirement information, and receive, from the DCSF entity, a response message including an application list containing information related to applications selected based on the multiplexing requirement information for supporting multiplexing, wherein the service requirement information includes multiplexing requirement information received from the UE.

According to an embodiment of the disclosure, a proxy-call state control function repository function (P-CSCF) entity in a wireless communication system includes a transceiver, and at least one processor, wherein the at least one processor is configured to receive, from a UE, a call session connection request message including requirement information for supporting multiplexing, transmit mapping information for supporting multiplexing in an IMS-AGW through signaling between the IMS-AGW and an IMS-ALG within the P-CSCF, transmit, to an IMS AS entity, SDP offer information modified based on the requirement information for supporting multiplexing, an SIP INVITE message including the modified SDP offer information being transmitted to a remote network or UE, and receive, from the IMS AS, mapping information for supporting multiplexing, based on information included in a SDP response message received from the remote UE, and transfer the received mapping information to the IMS-AGW and update the mapping information therein.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital Alternatively, any combination of some or all of them may form memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method of a proxy-call state control function (P-CSCF) entity in an Internet protocol (IP) multimedia subsystem-data channel (IMS-DC) service, the method comprising:
receiving, from a user equipment (UE), a data channel session connection request message including session description protocol (SDP) offer information, the SDP offer information including multiplexing support information;
based on the multiplexing support information, determining whether to support multiplexing; and
transmitting, to an IMS application gateway (IMS-AGW) entity, a request for data stream-related information, including the multiplexing support information.

2. The method of claim 1, comprising:
receiving, from the IMS-AGW entity, the data stream-related information based on the multiplexing support information; and
based on the data stream-related information, updating the SDP offer information
wherein the multiplexing support information is information indicating that receiving data streams of a plurality of applications by the UE through a single port is supported.

3. The method of claim 2, wherein updating of the SDP offer information comprises updating the SDP offer information, based on application connection type information included in the SDP offer information, in order to support the multiplexing.

4. The method of claim 1, further comprising transmitting, to an IMS application server (IMS AS), the updated SDP offer information,
wherein the updated SDP offer information is used to update a data channel control policy.

5. A method of an Internet protocol (IP) multimedia subsystem-application gateway (IMS-AGW) entity in an IP multimedia subsystem-data channel (IMS-DC) service, the method comprising:
receiving, from a proxy-call state control function (P-CSCF) entity, a request for data stream-related information, including multiplexing support information,
wherein the multiplexing support information is based on a data channel session connection request message including session description protocol (SDP) offer information, received from a user equipment (UE).

6. The method of claim 5, comprising transmitting, to the P-CSCF entity, the data stream-related information based on the multiplexing support information,
wherein the data stream-related information is used to update the SDP offer information received from the UE, and
wherein the multiplexing support information indicates that data streams of a plurality of applications are received by the UE through a single port.

7. The method of claim 5, wherein the SDP offer information is updated based on application connection type information included in the SDP offer information and the data stream-related information.

8. The method of claim 6, wherein the updated SDP offer information is used to update a data channel control policy.

9. A proxy-call state control function (P-CSCF) entity in an Internet protocol (IP) multimedia subsystem-data channel (IMS-DC) service, the P-CSCF entity comprising:
a transceiver; and
at least one processor,
wherein the at least one processor is configured to:
receive, from a user equipment (UE), a data channel session connection request message including session description protocol (SDP) offer information, the SDP offer information including multiplexing support information;
based on the multiplexing support information, determine whether to support multiplexing; and
transmit, to an IMS application gateway (IMS-AGW) entity, a request for data stream-related information, including the multiplexing support information.

10. The P-CSCF entity of claim 9, wherein the at least one processor is configured to:
receive, from the IMS-AGW entity, the data stream-related information based on the multiplexing support information; and
based on the data stream-related information, update the SDP offer information,
wherein the multiplexing support information is information indicating that receiving data streams of a plurality of applications by the UE through a single port is supported.

11. The P-CSCF entity of claim 10, wherein updating of the SDP offer information comprises updating the SDP offer information, based on application connection type information included in the SDP offer information, in order to support the multiplexing.

12. The P-CSCF entity of claim 9, wherein the at least one processor is configured to transmit, to an IMS application server (IMS AS), the updated SDP offer information,
wherein the updated SDP offer information is used to update a data channel control policy.

13. An Internet protocol (IP) multimedia subsystem-application gateway (IMS-AGW) entity in an IP multimedia subsystem-data channel (IMS-DC) service, the IMS-AGW entity comprising:
a transceiver; and
at least one processor, wherein the at least one processor is configured to receive, from a proxy-call state control function (P-CSCF) entity, a request for data stream-related information, including multiplexing support information,
wherein the multiplexing support information is based on a data channel session connection request message including session description protocol (SDP) offer information, received from a user equipment (UE).

14. The IMS-AGW entity of claim 13, wherein the at least one processor is configured to transmit, to the P-CSCF entity, the data stream-related information based on the multiplexing support information,
wherein the data stream-related information is used to update the SDP offer information received from the UE,
wherein the multiplexing support information indicates that data streams of a plurality of applications are received by the UE through a single port, and
wherein the updated SDP offer information is used to update a data channel control policy.

15. The IMS-AGW entity of claim 13, wherein the SDP offer information is updated based on application connection type information included in the SDP offer information and the data stream-related information.
